# EUROPEAN PATENT SPECIFICATION

(11) **EP 3 096 570 B1**
(45) Date of publication and mention of the grant of the patent: **27.02.2019**
(21) Application number: 16170749.2
(22) Date of filing: 20.05.2016
(51) Int. Cl.: H04W 56/00

(54) **TIME DISTRIBUTION IN WIRELESS COMMUNICATION SYSTEMS**
ZEITVERTEILUNG IN DRAHTLOSKOMMUNIKATIONSSYSTEMEN
RÉPARTITION TEMPORELLE DANS DES SYSTÈMES DE COMMUNICATION SANS FIL

(30) Priority: 20.05.2015 GB 201508647
(43) Date of publication of application: 23.11.2016
(73) Proprietor: Vodafone IP Licensing Limited, Newbury, Berkshire RG14 2FN (GB)
(72) Inventor: MURRAY, Eric Douglas, London W2 6BY (GB)
(74) Representative: Boult Wade Tennant LLP

(56) References cited:
- US-A1- 2011 171 949
- US-A1- 2012 008 516
- US-A1- 2013 121 315
- US-A1- 2013 301 619

## Description

### FIELD OF THE INVENTION

This invention relates to a system and method for the distribution of time information in wireless communication systems.

### BACKGROUND

Wireless cellular communication systems comprise a network of base stations, each base station providing radio coverage of a defined geographical area known as a "cell". The base stations are connected to the public telecommunications network via a network which provides control and management functionality for the wireless communication system.

Various terminology is utilised for components of a cellular system and the precise structure and distribution of functionality between entities also varies. In general the base stations and their respective controllers are known as the Radio Access Network (RAN), and the network interfacing the RAN to the public telecommunications network is known as the core network. Generic terminology will be used in this document without an intention to refer to any particular system or agreed standard. Where terminology is that of a particular standard the description is not intended to be restricted to only that standard unless specifically stated.

Mobile devices establish a radio connection to the base station for the cell in which the device is located to provide communication services to the mobile device via the RAN and core network.

It is often desirable for a mobile device to have an accurate measure of the absolute time. This may be utilised in communications with remote devices, or for the provision of services to users. A particular example requiring a high accuracy clock is the ability of a mobile device to act as a small cell within an LTE cellular network. A mobile device may accept connections from other devices and utilise its connection to an LTE macro cell for the backhaul of data from those connected devices. A single connection to the macro cell can thus provided coverage by the relevant network to a number of devices. Such functionality may require phase synchronisation with the LTE macro cell signals, which would require a clock accuracy in the region ± 1.5 µs. Other examples include applications for financial or synchronisation services which require accurate timing of events, or a clock with a known accuracy such that timestamps are known to be correct.

Examples of globally recognised time references are Universal Co-ordinated Time (UTC) or International Atomic Time (TAI). However, the distribution of such time references to mobile devices is difficult due to the unpredictable nature of the radio link, in particular latency of the radio link which varies with type of link and movement of the mobile device.

Global Navigation Satellite Systems (GNSS) such as the Global Positioning System (GPS) transmit accurate time measurements, but it is not always possible to receive such signals. For example, a mobile device may not have a GNSS receiver, or may be positioned indoors where the satellite signals cannot be received. Furthermore GNSS signals are vulnerable to local jamming and may be disabled by the controlling government without notice. GNSS signals cannot therefore be relied upon for an accurate time signal.

The Network Time Protocol (NTP) allows distribution of time information over variable latency packet switched networks. However, NTP can only achieve accuracies in the order of tens of milliseconds, which is insufficient for many applications.

A further method of calculating time at a mobile device in an LTE cellular network is Observed Time Difference Of Arrival (OTDOA) which is specified in the LTE standards. However, OTDOA is an optional feature of the LTE standards and may not be supported by all LTE network equipment and mobile devices. The technique also decreases the efficiency of LTE networks.

The process of defining standards is lengthy and it can be difficult to secure agreement. When changes are made to standards it can also take long periods of time for manufacturers to implement those changes in devices or chipsets. Changes to products incur costs for manufacturers and thus there can also be a reluctance to update products unless the changes are absolutely necessary. The provision of new features without requiring changes or additions to existing standards is therefore desirable. Mobile devices can typically be loaded with applications to perform functions not implemented in the basic device. Applications thus provide an attractive route to offering improved functionality without required redesign or alteration of the basic mobile device hardware or software.

There is therefore a requirement for a reliable and accurate method of accurately calculating absolute time at a mobile device.

US-2011/171949 concerns a two-step uplink synchronisation method between a mobile station and a pico/femto base station that is deployed together with an overlay macro-micro base station. The pico/femto base station encodes and broadcasts uplink transmission timing advance offset information via a broadcast channel. The mobile station decodes the received uplink transmission timing advance offset information and advances its uplink timing for uplink ranging or reference signal transmission based on the encoded offset value. The mobile station on the pico/femto base station performs regular uplink synchronisation and uplink access.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided a method of distributing time information from a base station to a mobile device in a cellular communications network in line with claim 1.

The cellular communications network may be a network operating according to the LTE standard.

The coarse indication of propagation delay is transmitted using the timing advance and timing advance update commands.

Prior to transmitting the fine indication of propagation delay it may be determined that the propagation delay is constant.

Prior to transmitting the fine indication of propagation delay it may be determined that the propagation delay is constant based on the transmission of a series of timing advance update commands indicating there is no change to the timing advance.

The method may further comprise the step of setting a clock at the mobile device based at least in part on the coarse and fine indications of propagation delay between the base station and mobile device.

Setting the clock may also be based at least in part on downlink frame timing and SFN alignment to a reference time.

Setting the clock may also be based at least in part on a time signal indicating absolute time.

The modulation scheme may be a Manchester modulation scheme.

The fine indication of propagation delay may be transmitted as a difference between the coarse indication of propagation delay and a calculated propagation delay.

The fine indication of propagation delay may be encoded as a binary number, and each bit of that binary number may be transmitted sequentially, the modulation scheme being such that each bit has no effect on the average value of the carrier signal.

The coarse and/or fine indications of propagation delay may be utilised at the mobile device to determine whether a clock at the mobile device is synchronised to a reference clock.

There is also provided a cellular network base station configured to perform the methods described herein.

There is also provided a method of receiving timing information at a mobile device from a base station in a cellular communications network in accordance with claim 9.

The cellular communications network may be a network operating according to the LTE standard.

The coarse indication of propagation delay is received in timing advance and timing advance update commands.

Setting the clock may also be based at least in part on downlink frame timing and SFN alignment to a reference time.

Setting the clock may also be based at least in part on a time signal indicating absolute time.

The fine indication of propagation delay may be received as a difference between the coarse indication of propagation delay and a calculated propagation delay.

The fine indication of propagation delay may be encoded as a binary number, and each bit of that binary number may be received sequentially, the modulation scheme being such that each bit has no effect on the average value of the carrier signal.

The coarse and/or fine indications of propagation delay may be utilised at the mobile device to determine whether a clock at the mobile device is synchronised to a reference clock.

There is also provided a mobile device configured to perform the methods described herein, which mobile device may be configured to act as a timing reference for an eNB in an LTE network, and/or to act as an eNB in an LTE network.

The preferred features may be combined as appropriate, as would be apparent to a skilled person, and may be combined with any of the aspects of the invention.

### DESCRIPTION OF THE DRAWINGS

The invention will now be described in detail with reference to the following drawings of which:
Figure 1 is a schematic diagram of a mobile device connected to a base station;
Figure 2 is a schematic diagram of LTE frame timing; and
Figure 3 is a flow chart of a method of determining time.

Throughout the drawings, like reference symbols refer to like features or steps.

### DETAILED DESCRIPTION OF THE INVENTION

The following description will be given with specific reference to the LTE cellular telecommunications standards, but the principles and processes are not restricted to that standard and may be applied in any appropriate wireless communications network.

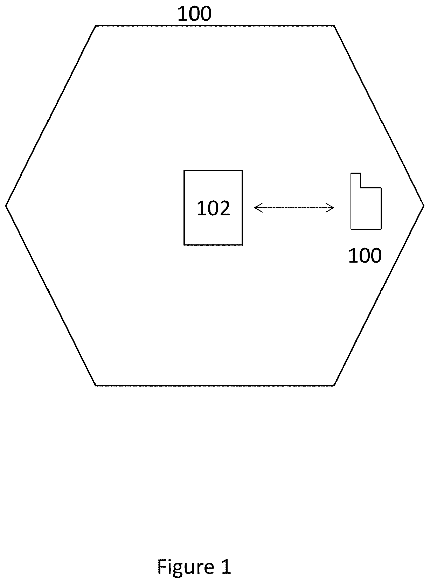

Figure 1 shows a schematic diagram of a mobile device 100 located within the cell 101 covered by base station 102. A radio link is established between the mobile device 100 and the base station 102. In the LTE standards base station 102 is known as an eNodeB, and mobile device 100 is known as a User Equipment (UE). Mobile device 100 may be a mobile telephone providing voice and data services, as well as running various applications for providing services to users.

Base station 102 has an accurate clock synchronised to a reference clock, for example UTC or TAI. The base station may be equipped with a GNSS receiver to synchronise its clock to TAI/UTC using the signals received from GNSS satellites, or a protocol such as IEEE 1588-2008 (Precision Time Protocol (PTP)) may be utilised to maintain synchronisation of the clock.

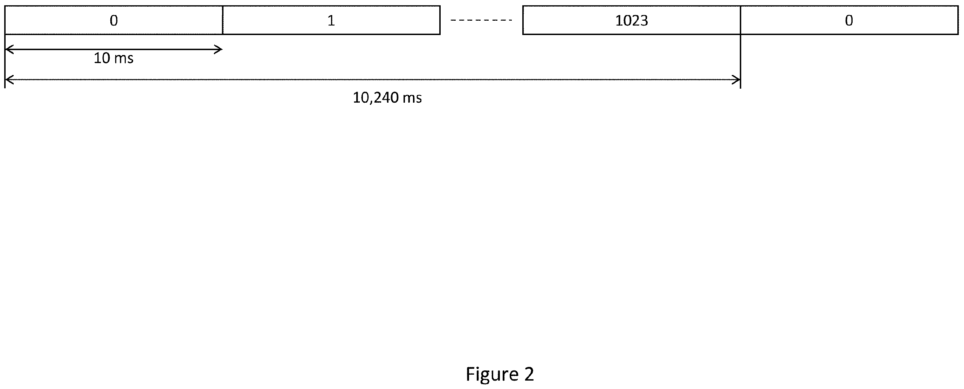

As shown in Figure 2, in the LTE system the radio link utilises 10ms frames. Each frame is allocated a System Frame Number (SFN). The SFN is a 10 bit field which repeats with a cycle time of 10ms x 2¹⁰ = 10,240ms (10.24s). The SFN is broadcast in signals from each base station, which signals can be received and decoded by mobile devices connected to the eNodeB.

Prior to Release 11 of the LTE standards no rules were provided for alignment of SFN periods to any time reference, nor for the transmission of such a reference. SFN thus had an arbitrary and unknown relationship to the absolute time. A mobile device cannot thus utilise the SFN to determine the time in relation to a standard, only the passage of time in relation to the particular base station. Furthermore, since the SFN repeats every 10.24s, without additional information time derived only from the SFN is ambiguous.

To enable the use of the SFN in determining time at a mobile station in the methods described herein, the SFN cycle is synchronised with an agreed standard time. For example, the start of a frame with SFN = 0 may be aligned with GPS time 0 (00:00:00 UTC on 6 January 1980). Although any agreed standard can be utilised, GPS time is convenient as it is synchronised with TAI, but has a relatively recent zero. Provided the mobile device is aware of the time reference for SFN = 0, the SFN can be utilised to determine the actual time relative to that reference time. However, an ambiguity remains due to the unknown number of SFN repeats since time 0 and so the absolute time cannot be known.

As explained above the SFN repeats every 10.24 seconds. To resolve the ambiguity an indication of time at the mobile device with an accuracy of better than ±5.12 seconds is required. A clock with this accuracy can be provided to a mobile device, for example using a network based time protocol such as NTP or NITZ. The mobile device is likely to have a data connection and hence NTP can be operated over that connection for the mobile device to obtain the time. A free-running mobile device clock may be able to maintain this level of accuracy for significant periods.

NTP distributes UTC and so an adjustment is required to obtain TAI if needed. The adjustment can be performed by obtaining the number of leap seconds currently applied to UTC utilising a data connection to the mobile device.

An application may be provided on the mobile device to calculate and set a clock. For the steps described above, such an application receives an indication of time and sets the clock. The application then obtains the SFN reference time, which may be coded within the application or may be transmitted to the mobile device via a data connection. It may be desirable to restrict access to the time information such that the ability to calculate an accurate time value can be provided as a chargeable service. The application may thus be sold, or a subscription may be required to obtain the time reference. The reference time for SFN = 0 may be varied to force a subscription to be maintained such that the current reference can be obtained.

The application utilises the SFN reference time and the SFN frame number to adjust the clock and improve its accuracy. However, the alignment of SFN to the reference time is set at the base station and so at the mobile device there is an error equal to the propagation delay between the base station and the mobile device

Release 11 of the LTE standards introduced new features regarding distribution of time information and it became possible to transmit UTC as part of a base station's standard transmissions. A mobile device connected to a base station with this functionality can thus relate SFN to UTC directly and there is no need for the steps described above to obtain the reference time.

The LTE standards provide a system for mobile terminals to adjust their transmission timing to account for the propagation delay such that uplink frames (from the mobile device to the base station) arrive at the base station aligned with downlink frames (from the base station to the mobile device). The base station monitors the reception of a known channel (PRACH) in relation to the downlink frame timing and calculates the difference. This value represents the propagation delay and is transmitted to the mobile device using the timing advance command. The mobile device uses the transmitted value to adjust the uplink transmission timing such that its frames arrive at the base station at the required time.

A mobile device positioned at the base station will have zero timing advance, and that advance increases with distance between the base station and mobile device. In the LTE standard the timing advance is transmitted as an 11-bit field with a quantisation of 16 x Ts (the symbol period), which equates to approximately 521 ns.

The primary purpose of the timing advance is to adjust the mobile device's uplink transmission timing, but the value can also be utilised to improve the accuracy of a clock at the mobile device. For example, the application described above may obtain the timing advance information and utilise this to adjust the clock to account for the propagation delay.

The timing advance is transmitted when a mobile device first establishes its connection to a base station. The base station may then subsequently transmit timing advance updates to adjust the timing advance if the distance between the mobile device and the base station changes. The timing advance updates may be based on measurements of any transmissions made to the eNB (e.g. PUSCH or PUCCH). If no appropriate transmissions are received the eNB may request a Sounding Reference Signal transmission, or may allow the UE to go out of synchronisation. The timing advance update indicates an adjustment to the timing advance indication rather than a new absolute value for the advance. In the LTE standard the timing advance update is a 6 bit field sent within a DL-SCH MAC PDU. A value of 31 indicates no change to the timing advance, with values either side indicating an increase or decrease in the timing advance. The quantisation of the timing advance update signal is the same as for the timing advance signal and thus a value of 30 or 32 would change the advance by 521 ns.

If the mobile device loses its synchronisation the PRACH channel may be used to obtain a new timing advance command. For example, the LTE standards specify a "timealignmenttimer" to monitor the reception of timing advance update commands. If no such commands are received during the period of the timer the mobile device may restart the access procedure to obtain a new timing advance indication.

The LTE standards also define Sounding Reference Signals (SRS). SRS signals are transmitted from a mobile device to a base station and can be utilised by the base station to estimate the propagation delay more accurately than is possible in the routine procedures. Other methods may also be utilised to improve the accuracy of the timing advance value at the base station. The achievable resolution is better than can be indicated using the timing advance and timing advance update command and accordingly the improved measurement cannot be transmitted to the mobile device, but may be utilised at the base station. For convenience, the value of timing advance transmitted by the timing advance commands will be referred to as the coarse timing advance (or coarse propagation delay), and the accurate estimate by the base station will be referred to as the fine timing advance (or fine propagation delay).

Where a mobile device is stationary the timing advance update command will have a value of 31, indicating no change to the coarse timing advance. The stationary nature of the mobile device, and knowledge that small, temporary, perturbations of the timing advance value will not significantly affect link quality allow the implementation of a signalling scheme to improve the accuracy of the mobile device's time information. Furthermore, since the base station has transmitted the "incorrect" timing advance, that base station knows certain signals will be received at the incorrect timing and compensation may be possible.

A signalling scheme is implemented for the transmission of the difference between the coarse and fine timing advance utilising the existing timing advance update commands. The difference is quantised and represented as a binary number of M bits. Those bits are utilised to modulate a series of timing advance update commands using a modulation scheme which does not affect the average value of the carrier signal (the timing advance update commands), for example a Manchester encoding scheme. This scheme means the data can be recovered at the mobile device, but the average value of the timing advance update command is constant at 31, indicating no change (provided the signalling scheme is used when the mobile device is stationary). Any appropriate protocol may be defined to control the transmission of the fine timing advance information. For example, a series of n timing advance update commands with a value of 31 may be utilised as a start and stop symbol. Individual timing advance update values are protected by the CRC bits for the transport channel and so further error checking should not be required. The value of M may be predefined, or may be transmitted to the mobile device either in a comparable manner to the fine timing advance information, or may be transmitted via a separate data connection.

The additional timing information is represented as the difference between the coarse and fine timing advance values. The coarse timing advance has a quantisation of 521 ns and so the quantisation of the fine timing advance is 521 ns / 2^{M}. If M = 4, this gives a resolution of 32.6 ns, or an accuracy of +/- 16.3 ns.

In a specific example, a Boolean 0 is indicated by a value 30 followed by a value 32, and a Boolean 1 by a value 32 followed by a value 30. The individual changes in timing advance will be applied by the mobile device, but are sufficiently small that they will not affect performance. The average coarse timing advance change over each bit (communicated by two timing advance values) is zero and so the timing advance returns to the same value after each bit is transmitted.

If the base station detects movement of the mobile device during transmission of the fine time advance that transmission may be stopped (after a complete bit has been transmitted to avoid an effect on the coarse timing advance) and "genuine" timing advance update values can then be transmitted to the mobile device. Since the mobile device acts on all received timing advance update commands there is no need to distinguish between a modulated value and a genuine value. The protocol utilised for the encoding should be designed such that the application at the mobile device interpreting modulated values can cope with a scenario in which a fine timing advance indication is only partially received. In an alternative method the issue of "genuine" timing advance update values may be supressed until transmission of the fine timing advance update signals is complete.

Provided the average coarse timing advance change over each transmitted bit of the fine timing advance is zero other modulation schemes are also possible. For example a multi-level scheme could be utilised according to the following table:-

| Value 1 | Value 2 | Data |
|---|---|---|
| 30 | 32 | 00 |
| 32 | 30 | 01 |
| 29 | 33 | 10 |
| 33 | 29 | 11 |

The particular values are given for example only to demonstrate the principle. Such a multi-level modulation has the advantage of carrying an increased amount of data (two bits per pair of timing advance update command as opposed to one), but a potential disadvantage is the increased error in timing advance that will be created during the transmission as the mobile device will adjust its timing advance by two steps rather than one. Such schemes may thus only be appropriate when the UE is not transmitting. The average coarse timing advance remains unaffected, but there may be a temporary decrease in signal quality as the timing advance will move further away from the correct value during the transmission.

Typically timing advance commands are interpreted by the radio chipset of the mobile device. The functionality of this decoding process and chip set is not affected by the use of this signalling system, but additional software (for example the application discussed above) may be utilised to process the values obtained from the timing advance commands. The fine timing advance information is thus not used to modify the radio communication settings, but may be used for other purposes such as improving clock accuracy. The application described above may receive the timing advance update values, decode the fine timing advance, and adjust the clock based on that value.

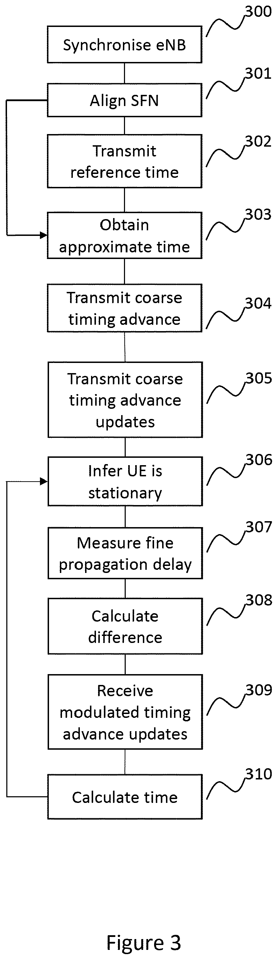

Figure 3 shows a flow chart of a method of accurately establishing the time at a stationary mobile device (UE) within an LTE system. The UE is provided with an application for performing certain steps of the method and for utilising the resulting accurate time indication. The application may be pre-installed on the UE or may be available for download and installation by users. Access to the application, and the services it provides, may be restricted to users paying for the services, or only particular users who are allowed to subscribe.

At step 300 the clock of an eNB is synchronised to a known reference, for example using a clock signal from a GNSS transmission or a time signal distributed using IEEE 1588-2008. At step 301 the SFN of the eNB is aligned to a known reference time. The reference time may be, for example, an agreed standard time such as GPS Time 0, or an arbitrary, but known, reference time.

At step 302 the reference time is communicated to the UE. In Release 11 and later systems the reference time may be communicated with the standard radio transmissions from the eNB which allow for the transmission of UTC and SFN alignment thereto. In PreRelease 11 systems the reference time may be transmitted via a data connection, such as a data connection provided via the cellular network's data services, or via any other data connection available to the UE. The reference time may be transmitted to a particular UE, or may be broadcast for reception by appropriately equipped UEs, or the time reference may be requested by the UE using an application on the mobile device. Furthermore, the time reference may be pre-defined within the application and there is thus no requirement for the transmission of the reference in step 302.

At step 303 a mobile device obtains an approximate indication of the actual time from any appropriate source. For example that time may be received via NTP or NITZ. LTE Release 11 introduced the ability to transmit UTC time signals. A compatible UE may thus obtain the actual time from such a signal if is broadcast by the eNB to which the UE is connected.

At step 304 the coarse propagation delay is calculated and the eNB transmits a signal indicating that delay to the UE. For example, the timing advance command of the LTE standard is transmitted based on the reception of a PRACH signal from the UE. As explained above, the timing advance indicated by the timing advance command (and timing advance update command) will be referred to as the coarse timing advance (or coarse propagation delay). The UE utilises the timing advance command information to adjust its timing advance for its uplink radio transmissions.

At step 305 the eNB continues communication with the UE and transmits timing advance update commands as appropriate to maintain the correct timing advance as the UE's distance to the eNB changes. The UE updates its timing advance based on the timing advance update commands.

At step 306 the eNB monitors the timing advance required for the UE. If the timing advance does not change for a predefined period of time or number of timing advance updates (i.e. the value 31 is transmitted to indicate no change) the eNB infers that the UE is stationary.

Once the UE is detected as stationary, an accurate measure of propagation delay (the fine propagation delay) is taken, for example utilising SRS signals. The difference between the coarse and fine timing advance is calculated and quantised. In an example 4 bit quantisation is utilised (step 307).

At step 308 the difference between the coarse and fine timing advance is transmitted to the UE by modulating timing advance update commands using a modulation scheme which does not affect the average value of those commands. For example, a Boolean 0 may indicated by a value 30 followed by a value 32, and a Boolean 1 by a value 32 followed by a value 30. According to the specific protocol utilised, start and stop symbols may be utilised before the actual data.

At step 309 the modulated timing advance update commands are received at the UE. The radio systems of the mobile device decode each timing advance update command in the standard manner and will modify the timing advance based on each individual value. This will lead to temporary errors in the timing advance, but as indicated above any degradation should be minor. The average value of the commands is 31 and hence the value of the timing advance is not affected after the reception of each bit. The timing advance update values are also read by an application running at the mobile device.

At step 310 an application at the UE processes the various received time indications to calculate an accurate time. The approximate time received at step 303 is adjusted based on the SFN and SFN = 0 reference time. The fine timing advance is calculated based on a combination of the coarse timing advance and the difference received in the modulated timing advance update commands. The fine timing advance is utilised to adjust the clock to compensate for the propagation delay. As explained above, an accuracy of +/- 16.3 ns may be achieved using this process. Better accuracy may also be achieved by increasing the number of bits used to encode the fine timing advance signal.

The eNB continues to monitor for a UE being stationary and as appropriate recalculates and transmits fine propagation delay values. Although there may no change due to the inferred stationary nature of the UE, changes in the environment or small movement of the UE may cause a change in propagation delay.

Since the above methods do not change conventional operation of the signalling system no modification is required of existing devices, hardware or software. However, by adding an application (or hardware, firmware if preferred) a mobile device can receive a more accurate indication of the timing advance and hence maintain a clock at an improved accuracy.

The mobile device may use the fine propogation delay values, and other time indications, to verify the synchronisation of the mobile device's clock. That is, the clock may not be adjusted based on these values, but only checked. An indication of clock synchronisation may be utilised to indicate when the mobile device is able to perform certain tasks which require a certain clock accuracy.

The application, or other applications, may utilise the accurate clock to provide functions to the user. For example, the mobile device may act as a small-cell in the LTE system to allow other devices to connect to the network. Other applications may include financial services where an accurate time stamp on activity is required.

In the LTE system a plurality of small-cells may be utilised as an additional "layer" of radio coverage in addition to a macro cell. Back-haul from the small-cell eNBs may be provided by a wired or fixed wireless (e.g. WiFi) connection, or by a cellular connection to the relevant LTE macro cell covering the area. The eNBs may be dedicated equipment, or may be a mobile device. For example, the mobile devices of subscribers to the macro cell network may provide a small cell for other local devices and may utilise its connection to the macro cell for back haul of data. Examples of such system are described in the following co-pending applications:-

| Country | Application No. | Application Date |
|---|---|---|
| EP | 14382390.4 | 13 October 2014 |
| EP | 15382033.7 | 2 February 2015 |
| EP | 14382497.7 | 5 December 2014 |
| EP | 14382572.7 | 26 December 2014 |
| EP | 15382031.1 | 2 February 2015 |
| EP | 14382499.3 | 5 December 2014 |
| EP | 14382571.9 | 26 December 2014 |

The methods described herein may be utilised to allow a mobile device (of any type) to act as a small cell eNB within an LTE network. To provide such a service (or to act as a clock source for other devices) the mobile device must be configured to act as an IEEE 1588v2 clock and use the mobile device's accurate timing information to generate PTP packets. Such a configuration may require an oscillator with improved accuracy compared to commonly available mobile devices.

The base stations and other network components discussed herein may be implemented in any known manner using standard techniques. Parts or all of those network components may be implemented in a single computing system, or in multiple networked computing systems. Those computer systems may be general-purpose computer systems, or specific systems operating on comparable principles. The actual implementation may be dependent on a range of parameters and requirements of the operator.

As known in the data processing and communications arts, a general-purpose computer typically comprises a central processor or other processing device, an internal communication bus, various types of memory or storage media (RAM, ROM, EEPROM, cache memory, disk drives etc.) for code and data storage, and one or more network interface cards or ports for communication purposes. The software functionalities involve programming, including executable code as well as associated stored data. The software code is executable by the general-purpose computer that functions as the server or terminal device used for transmitting queries, analysing data, or responding to queries, or any other relevant function. In operation, the code is stored within the general-purpose computer platform. At other times, however, the software may be stored at other locations and/or transported for loading into the appropriate general-purpose computer system. Execution of such code by a processor of the computer platform or by a number of computer platforms enables the platform(s) to implement the methodologies described herein.

Those skilled in the art will be familiar with the structure of general purpose computer hardware platforms. As will be appreciated, such a platform may be arranged to provide a computer with user interface elements, as may be used to implement a personal computer or other type of work station or terminal device. A general purpose computer hardware platform may also be arranged to provide a network or host computer platform, as may typically be used to implement a server, or other specific component such as an eNB or other cellular network equipment.

As is well-known mobile devices may comprise processing systems, memory, input devices and display devices, as well as systems to provide wireless communications. Applications may be stored in the device memory and run on the device to provide services to users.

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Aspects of the methods described herein may be embodied in programming. Program aspects of the technology may be thought of as "products" or "articles of manufacture" typically in the form of executable code and/or associated data that is carried on or embodied in a type of machine readable medium and/or in a plurality of such media. "Storage" type media include any or all of the tangible memory of the computers, processors or the like, or associated modules thereof, such as various semiconductor memories, tape drives, disk drives and the like, which may provide non- transitory storage at any time for the software programming. All or portions of the software may at times be communicated through the Internet or various other telecommunication networks. Such communications, for example, may enable loading of the software from one computer or processor into another. Thus, another type of media that may bear the software elements includes optical, electrical and electromagnetic waves, such as used across physical interfaces between local devices, through wired and optical landline networks and over various air- links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like. Volatile storage media include dynamic memory, such as main memory of such a computer platform. Tangible transmission media include coaxial cables; copper wire and fibre optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Although the present invention has been described in terms of specific exemplary embodiments, it will be appreciated that various modifications, alterations and/or combinations of features disclosed herein will be apparent to those skilled in the art.

## Claims

1. A method of distributing time information from a base station (102) to a mobile device (100) in a cellular communications network, the method comprising the steps of
transmitting from a base station (102) to a mobile device (100) a timing advance command and a series of timing advance update commands, each providing a respective coarse indication of the propagation delay between the base station (102) and the mobile device (100); and
transmitting from the base station (102) to the mobile device (100) a fine indication of the propagation delay between the base station (102) and the mobile device (100),
**characterised in that** the fine indication is transmitted by modulating the series of timing advance update commands, utilising a modulation scheme which does not affect the average value of the series of timing advance update commands.

2. A method of distributing time information according to claim 1, where the cellular communications network is a network operating according to the LTE standard.

3. A method of distributing time information according to any preceding claim, wherein prior to transmitting the fine indication of propagation delay it is determined that the propagation delay is constant, and/or wherein prior to transmitting the fine indication of propagation delay it is determined that the propagation delay is constant based on the transmission of a series of timing advance update commands indicating there is no change to the timing advance.

4. A method distributing time information according to any preceding claim, further comprising the step of setting a clock at the mobile device (100) based at least in part on the coarse and fine indications of propagation delay between the base station (102) and mobile device (100), and/or wherein setting the clock is also based at least in part on downlink frame timing and SFN alignment to a reference time.

5. A method of distributing time information according to claim 4, wherein setting the clock is also based at least in part on a time signal indicating absolute time.

6. A method of distributing time information according to any preceding claim, wherein the modulation scheme is a Manchester modulation scheme, and/or wherein the fine indication of propagation delay is transmitted as a difference between the coarse indication of propagation delay and a calculated propagation delay.

7. A method of distributing time information according to claim 6, wherein the fine indication of propagation delay is encoded as a binary number, and each bit of that binary number is transmitted sequentially, the modulation scheme being such that each bit has no effect on the average value of the series of timing advance update commands.

8. A method of distributing time information according to any preceding claim, wherein the coarse and/or fine indications of propagation delay are utilised at the mobile device together with reference time of a reference clock communicated to the mobile device, to determine whether a clock at the mobile device is synchronised to the reference clock.

9. A method of receiving timing information at a mobile device (100) from a base station (102) in a cellular communications network, the method comprising the steps of
receiving from the base station (102) a timing advance command and a series of timing advance update commands, each providing a respective coarse indication of the propagation delay between the base station (102) and the mobile device (100);
receiving from the base station (102) a fine indication of the propagation delay between the base station (102) and the mobile device (100),
setting a clock based at least in part on the received coarse indication of propagation delay, and fine indication of propagation delay,
**characterised in that** the fine indication has been transmitted by modulating the series of timing advance update commands utilising a modulation scheme which does not affect the average value of the series of timing advance update commands.

10. A method of receiving time information according to claim 9, where the cellular communications network is a network operating according to the LTE standard.

11. A method of receiving time information according to claim 9 or claim 10, wherein setting the clock is also based at least in part on downlink frame timing and SFN alignment to a reference time, and/or wherein setting the clock is also based at least in part on a time signal indicating absolute time.

12. A method of receiving time information according to any of claims 9 to 11, wherein the fine indication of propagation delay is received as a difference between the coarse indication of propagation delay and a calculated propagation delay, and/or wherein the fine indication of propagation delay is encoded as a binary number, and each bit of that binary number is received sequentially, the modulation scheme being such that each bit has no effect on the average value of the series of timing advance update commands , and/or wherein the coarse and/or fine indications of propagation delay are utilised at the mobile device together with reference time of a reference clock communicated to the mobile device, to determine whether a clock at the mobile device is synchronised to the reference clock.

13. A cellular network base station (102), configured to perform the method of claim 1.

14. A mobile device (100) configured to perform the method of any of claims 9 to 12.

## Patentansprüche

1. Ein Verfahren zur Verteilung von Zeitinformationen von einer Basisstation (102) an eine mobile Vorrichtung (100) in einem zellularen Kommunikationsnetzwerk, wobei das Verfahren die folgenden Schritte umfasst
Übertragen eines Vorhaltezeitbefehls und einer Reihe von Vorhaltezeitaktualisierungsbefehlen von einer Basisstation (102) an eine mobile Vorrichtung (100), wobei jeder eine entsprechende grobe Angabe der Übertragungsverzögerung zwischen der Basisstation (102) und der mobilen Vorrichtung (100) bereitstellt; und
Übertragen einer genauen Angabe der Übertragungsverzögerung zwischen der Basisstation (102) und der mobilen Vorrichtung (100) von der Basisstation (102) an die mobile Vorrichtung (100), **dadurch gekennzeichnet, dass** die genaue Angabe durch die Modulation der Reihe von Vorhaltezeitaktualisierungsbefehlen unter Verwendung eines Modulationsschemas übertragen wird, das den Durchschnittswert der Reihe von Vorhaltezeitaktualisierungsbefehlen nicht beeinflusst.

2. Ein Verfahren zur Verteilung von Zeitinformationen nach Anspruch 1, wobei es sich bei dem zellularen Kommunikationsnetzwerk um ein Netzwerk handelt, das gemäß LTE-Standard betrieben wird.

3. Ein Verfahren zur Verteilung von Zeitinformationen nach einem vorhergehenden Anspruch, wobei vor der Übertragung der genauen Angabe der Übertragungsverzögerung bestimmt wird, dass die Übertragungsverzögerung konstant ist, und/oder wobei vor der Übertragung der genauen Angabe der Übertragungsverzögerung bestimmt wird, dass die Übertragungsverzögerung konstant ist, basierend auf der Übertragung einer Reihe von Vorhaltezeitaktualisierungsbefehlen mit der Angabe, dass keine Änderung an der Vorhaltezeit vorliegt.

4. Ein Verfahren zur Verteilung von Zeitinformationen nach einem vorhergehenden Anspruch, weiter umfassend den Schritt der Einstellung eines Taktes an der mobilen Vorrichtung (100), zumindest teilweise basierend auf den groben und genauen Angaben der Übertragungsverzögerung zwischen der Basisstation (102) und der mobilen Vorrichtung (100), und/oder wobei die Einstellung des Taktes ferner zumindest teilweise auf Abwärtsstreckenrahmenzeitgaben und der Abstimmung des SFN auf eine Referenzzeit basiert.

5. Ein Verfahren zur Verteilung von Zeitinformationen nach Anspruch 4, wobei die Einstellung des Taktes ferner zumindest teilweise auf einem Zeitsignal mit der Angabe der absoluten Zeit basiert.

6. Ein Verfahren zur Verteilung von Zeitinformationen nach einem vorhergehenden Anspruch, wobei es sich bei dem Modulationsschema um ein Manchester-Modulationsschema handelt und/oder wobei die genaue Angabe der Übertragungsverzögerung als Differenz zwischen der groben Angabe der Übertragungsverzögerung und einer berechneten Übertragungsverzögerung übertragen wird.

7. Ein Verfahren zur Verteilung von Zeitinformationen nach Anspruch 6, wobei die genaue Angabe der Übertragungsverzögerung als Binärzahl kodiert ist und jedes Bit dieser Binärzahl nacheinander übertragen wird, wobei das Modulationsschema dergestalt ist, dass jedes Bit den Durchschnittswert der Reihe von Vorhaltezeitaktualisierungsbefehlen nicht beeinflusst.

8. Ein Verfahren zur Verteilung von Zeitinformationen nach einem vorhergehenden Anspruch, wobei die groben und/oder genauen Angaben der Übertragungsverzögerung gemeinsam mit einer Referenzzeit eines an die mobile Vorrichtung kommunizierten Referenztaktes verwendet werden, um zu bestimmen, ob ein Takt an der mobilen Vorrichtung mit dem Referenztakt synchronisiert ist.

9. Ein Verfahren zum Empfang von Zeitinformationen von einer Basisstation (102) an einer mobilen Vorrichtung (100) in einem zellularen Kommunikationsnetzwerk, wobei das Verfahren die folgenden Schritte umfasst
Empfangen eines Vorhaltezeitbefehls und einer Reihe von Vorhaltezeitaktualisierungsbefehlen von der Basisstation (102), wobei jeder eine entsprechende grobe Angabe der Übertragungsverzögerung zwischen der Basisstation (102) und der mobilen Vorrichtung (100) bereitstellt;
Empfangen einer genauen Angabe der Übertragungsverzögerung zwischen der Basisstation (102) und der mobilen Vorrichtung (100) von der Basisstation (102),
Einstellen eines Taktes, zumindest teilweise basierend auf der empfangenen groben Angabe der Übertragungsverzögerung und der genauen Angabe der Übertragungsverzögerung, **dadurch gekennzeichnet, dass** die genaue Angabe durch die Modulation der Reihe von Vorhaltezeitaktualisierungsbefehlen unter Verwendung eines Modulationsschemas übertragen wurde, das den Durchschnittswert der Reihe von Vorhaltezeitaktualisierungsbefehlen nicht beeinflusst.

10. Ein Verfahren zum Empfang von Zeitinformationen nach Anspruch 9, wobei es sich bei dem zellularen Kommunikationsnetzwerk um ein Netzwerk handelt, das gemäß LTE-Standard betrieben wird.

11. Ein Verfahren zum Empfang von Zeitinformationen nach Anspruch 9 oder Anspruch 10, wobei die Einstellung des Taktes ferner zumindest teilweise auf Abwärtsstreckenrahmenzeitgaben und der Abstimmung des SFN auf eine Referenzzeit basiert und/oder wobei die Einstellung des Taktes ferner zumindest teilweise auf einem Zeitsignal mit der Angabe der absoluten Zeit basiert.

12. Ein Verfahren zum Empfang von Zeitinformationen nach Anspruch 9 bis 11, wobei die genaue Angabe der Übertragungsverzögerung als eine Differenz zwischen der genauen Angabe der Übertragungsverzögerung und einer berechneten Übertragungsverzögerung empfangen wird und/oder wobei die genaue Angabe der Übertragungsverzögerung als Binärzahl kodiert ist und jedes Bit dieser Binärzahl nacheinander empfangen wird, wobei das Modulationsschema dergestalt ist, dass jedes Bit den Durchschnittswert der Reihe von Vorhaltezeitaktualisierungsbefehlen nicht beeinflusst, und/oder wobei die groben und/oder genauen Angaben der Übertragungsverzögerung gemeinsam mit einer Referenzzeit eines an die mobile Vorrichtung kommunizierten Referenztaktes verwendet werden, um zu bestimmen, ob ein Takt an der mobilen Vorrichtung mit dem Referenztakt synchronisiert ist.

13. Eine Basisstation (102) eines zellularen Netzwerks, die so konfiguriert ist, dass sie das Verfahren nach Anspruch 1 durchführt.

14. Eine mobile Vorrichtung (100), die so konfiguriert ist, dass sie das Verfahren nach einem der Ansprüche 9 bis 12 durchführt.

## Revendications

1. Un procédé de distribution d'informations temporelles à partir d'une station de base (102) vers un dispositif mobile (100) dans un réseau de communications cellulaire, le procédé comprenant les opérations suivantes :
la transmission à partir d'une station de base (102) vers un dispositif mobile (100) d'une commande d'avance de synchronisation et d'une série de commandes d'actualisation d'avance de synchronisation, chacune d'elles fournissant une indication grossière respective du temps de propagation entre la station de base (102) et le dispositif mobile (100), et
la transmission à partir de la station de base (102) vers le dispositif mobile (100) d'une indication fine du temps de propagation entre la station de base (102) et le dispositif mobile (100), **caractérisé en ce que** l'indication fine est transmise par la modulation de la série de commandes d'actualisation d'avance de synchronisation au moyen d'un mécanisme de modulation qui n'affecte pas la valeur moyenne de la série de commandes d'actualisation d'avance de synchronisation.

2. Un procédé de distribution d'informations temporelles selon la Revendication 1, où le réseau de communications cellulaire est un réseau fonctionnant conformément à la norme LTE.

3. Un procédé de distribution d'informations temporelles selon l'une quelconque des Revendications précédentes, où, avant la transmission de l'indication fine du temps de propagation, il est déterminé que le temps de propagation est constant, et/ou où, avant la transmission de l'indication fine du temps de propagation, il est déterminé que le temps de propagation est constant en fonction de la transmission d'une série de commandes d'actualisation d'avance de synchronisation indiquant qu'il n'existe aucune modification à l'avance de synchronisation.

4. Un procédé de distribution d'informations temporelles selon l'une quelconque des Revendications précédentes, comprenant en outre l'opération de réglage d'une horloge au niveau du dispositif mobile (100) en fonction au moins en partie des indications fine et grossière du temps de propagation entre la station de base (102) et dispositif mobile (100), et/ou où le réglage de l'horloge est également basé au moins en partie sur une synchronisation de trames en liaison descendante et un alignement SFN sur une heure de référence.

5. Un procédé de distribution d'informations temporelles selon la Revendication 4, où le réglage de l'horloge est également basé au moins en partie sur un signal temporel indiquant un temps absolu.

6. Un procédé de distribution d'informations temporelles selon l'une quelconque des Revendications précédentes, où le mécanisme de modulation est un mécanisme de modulation Manchester, et/ou où l'indication fine du temps de propagation est transmise sous la forme d'une différence entre l'indication grossière du temps de propagation et un temps de propagation calculé.

7. Un procédé de distribution d'informations temporelles selon la Revendication 6, où l'indication fine du temps de propagation est codée sous la forme d'un nombre binaire, et chaque bit de ce nombre binaire est transmis séquentiellement, le mécanisme de modulation étant tel que chaque bit n'a aucun effet sur la valeur moyenne de la série de commandes d'actualisation d'avance de synchronisation.

8. Un procédé de distribution d'informations temporelles selon l'une quelconque des Revendications précédentes, où les indications fine et/ou grossière du temps de propagation sont utilisées au niveau du dispositif mobile conjointement avec l'heure de référence d'une horloge de référence communiquée au dispositif mobile, de façon à déterminer si une horloge au niveau du dispositif mobile est synchronisée avec l'horloge de référence.

9. Un procédé de réception d'informations de synchronisation au niveau d'un dispositif mobile (100) à partir d'une station de base (102) dans un réseau de communications cellulaire, le procédé comprenant les opérations suivantes :
la réception à partir de la station de base (102) d'une commande d'avance de synchronisation et d'une série de commandes d'actualisation d'avance de synchronisation, chacune d'elles fournissant une indication grossière respective du temps de propagation entre la station de base (102) et le dispositif mobile (100),
la réception à partir de la station de base (102) d'une indication fine du temps de propagation entre la station de base (102) et le dispositif mobile (100),
le réglage d'une horloge en fonction au moins en partie de l'indication grossière reçue du temps de propagation et de l'indication fine du temps de propagation, **caractérisé en ce que** l'indication fine a été transmise par la modulation de la série de commandes d'actualisation d'avance de synchronisation au moyen d'un mécanisme de modulation qui n'affecte pas la valeur moyenne de la série de commandes d'actualisation d'avance de synchronisation.

10. Un procédé de réception d'informations temporelles selon la Revendication 9, où le réseau de communications cellulaire est un réseau fonctionnant conformément à la norme LTE.

11. Un procédé de réception d'informations temporelles selon la Revendication 9 ou 10, où le réglage de l'horloge est également basé au moins en partie sur une synchronisation de trames en liaison descendante et un alignement SFN sur une heure de référence, et/ou où le réglage de l'horloge est également basé au moins en partie sur un signal temporel indiquant un temps absolu.

12. Un procédé de réception d'informations temporelles selon l'une quelconque des Revendications 9 à 11, où l'indication fine du temps de propagation est reçue sous la forme d'une différence entre l'indication grossière du temps de propagation et un temps de propagation calculé, et/ou où l'indication fine du temps de propagation est codée sous la forme d'un nombre binaire, et chaque bit de ce nombre binaire est reçu séquentiellement, le mécanisme de modulation étant tel que chaque bit n'a aucun effet sur la valeur moyenne de la série de commandes d'actualisation d'avance de synchronisation, et/ou où les indications fine et/ou grossière du temps de propagation sont utilisées au niveau du dispositif mobile conjointement avec une heure de référence d'une horloge de référence communiquée au dispositif mobile, de façon à déterminer si une horloge au niveau du dispositif mobile est synchronisée avec l'horloge de référence.

13. Une station de base de réseau cellulaire (102) configurée de façon à exécuter le procédé selon la Revendication 1.

14. Un dispositif mobile (100) configuré de façon à exécuter le procédé selon l'une quelconque des Revendications 9 à 12.
